# EUROPEAN PATENT APPLICATION

(11) **EP 2 187 286 A1**
(43) Date of publication of application: **19.05.2010**
(21) Application number: 09168381.3
(22) Date of filing: 21.08.2009
(51) Int. Cl.: G06F 1/30

(54) **Image processing apparatus and control method thereof**

(30) Priority: 05.11.2008 KR 20080109222
(71) Applicant: Samsung Electronics Co., Ltd, Suwon-si, Gyeonggi-do 442-742 (KR)
(72) Inventor: Jeon, Nam-jae, Suwon-si (KR); Kim, Je-ik, Suwon-si (KR)
(74) Representative: Waddington, Richard

(57) **Abstract**

Disclosed are an image processing apparatus and a control method of the image processing apparatus. The image processing apparatus includes: a storing unit in which booting data for system booting is stored; a random access memory (RAM) in which the booting data is loaded; a central processing unit which loads the booting data in the RAM if system power supply is turned off, and refers to the booting data loaded in the RAM to perform the system booting if the system power supply is turned on; and a control unit which cuts off power supply to the central processing unit, and controls the RAM to operate in a low power mode in which power is supplied to the RAM to maintain the booting data loaded in the RAM while the system power supply is turned off.

## Description

### BACKGROUND OF THE INVENTION

### 1. Field of the Invention

Apparatuses and methods consistent with the present invention relate to an image processing apparatus and a control method thereof processing an input image, and more particularly, to an image processing apparatus and a control method thereof having a configuration of processing data needed in a system booting.

### 2. Description of the Related Art

An image processing apparatus processes an image supplied from an image supplying source to be displayed in a display panel implemented by a liquid crystal, a plasma, etc. Since various functions for processing an image are provided to the image processing apparatus, the amount of data needed to be referred to by the image processing apparatus driving in system booting increases, and accordingly, time needed for the system booting of the image processing apparatus increases.

Various related art technologies are used to reduce a system booting time of the image processing apparatus.

For example, data for a system booting is packaged in a flash memory by a given standard, and this package is intactly loaded in a random access memory (RAM) in a system booting. This data package for booting is referred to a hibernation image or a snapshot image.

However, if the data amount of the hibernation image is large, a lot of time is needed to load the hibernation image in the RAM, and the system booting of the image processing apparatus is delayed.

### SUMMARY OF THE INVENTION

According to the present invention there is provided an apparatus and method as set forth in the appended claims. Other features of the invention will be apparent from the dependent claims, and the description which follows.

According to an aspect of the present invention, there is provided an image processing apparatus, including: a storing unit in which booting data used for system booting of the apparatus is stored; a RAM in which the booting data is loaded from the storing unit; a central processing unit which loads the booting data in the RAM from the storing unit if system power supply to the apparatus is turned off, and refers to the booting data loaded in the RAM to perform the system booting if the system power supply is turned on; and a control unit which cuts off power supply to the central processing unit, and controls the RAM to operate in a low power mode in which power is supplied to the RAM to maintain the booting data loaded in the RAM while the system power supply is turned off.

The control unit may monitor whether the RAM maintains the low power mode or not while the system power supply is turned off, and may input a selective logic signal corresponding to a monitoring result to the central processing unit if the system power supply is turned on.

The central processing unit may determine whether the RAM maintains the low power mode or not while the system power supply is turned off based on the logic signal input from the control unit, and may perform the system booting based on a determining result.

The central processing unit may refer to the booting data previously loaded in the RAM without loading the booting data from the storing unit if determining that the RAM maintains the low electric power mode, and may load the booting data from the storing unit to the RAM if determining that the RAM does not maintain the low power mode.

The central processing unit may examine an error of the booting data previously loaded in the RAM if determining that the RAM maintains the low power mode, and refers to the booting data previously loaded in the RAM without loading the booting data in the RAM from the storing unit, and may load the booting data from the storing unit in the RAM if determining that there is an error in the booting data previously loaded.

The control unit may transmit to the RAM a command ordering the RAM to enter the low power mode if determining that the booting data is loaded to the RAM after the system power supply is turned off.

The storing unit may include a non volatile memory maintaining a data previously stored if electric power supply is broken.

Another aspect of the present invention may be achieved by providing a method of controlling an image processing apparatus which includes a storing unit storing booting data used for system booting of the apparatus, a RAM in which the booting data is loaded, and a central processing unit which refers to the booting data to perform the system booting, the method including: loading the booting data in the RAM if system power supply to the apparatus is turned off, and cutting off power to the central processing unit and operating the RAM in a low power mode in which power is applied to the RAM to maintain the booting data loaded in the RAM while the system power supply is turned off; and causing the central processing unit to refer to the booting data loaded in the RAM to perform the system booting if the system power supply to the apparatus is turned on.

The operating the RAM in the low power mode may include monitoring whether the RAM maintains the low power mode or not while the system power supply is turned off, and the causing the central processing unit to refer to the booting data loaded in the RAM to perform the system booting may include inputting a selective logic signal corresponding to a monitoring result to th e central processing unit.

The causing the central processing unit to refer to the booting data loaded in the RAM to perform the system booting further may include causing the central processing unit to selectively perform the system booting based on the logic signal input to the central processing unit.

T h e causing th e central processing unit to selectively perform the system booting may include: referring to the booting data previously loaded in the RAM without loading the booting data to the RAM from the storing unit if a logic signal indicating that the RAM maintains the low electric power mode is received, and loading the booting data to the RAM from the storing unit if a logic signal indicating that the RAM does not maintain the low electric power mode is received.

The referring to the booting data previously loaded to the RAM may include: examining an error of the booting data previously loaded to the RAM if the logic signal indicating that the RAM maintains the low power mode is received, and loading the booting data from the storing unit to the RAM if it is determined that there is an error in the booting data previously loaded in the RAM.

### BRIEF DESCRIPTION OF THE DRAWINGS

The present invention will become apparent and more readily appreciated from the following description of the exemplary embodiments, taken in conjunction with the accompanying drawings, in which:
FIG. 1 is a block diagram of an image processing apparatus according to an exemplary embodiment;
FIG. 2 is a flowchart illustrating a control method of the image processing apparatus in FIG. 1, according to an exemplary embodiment;
FIG. 3 is a flowchart of a central processing unit if system power supply is turned off in the image processing apparatus in FIG. 1, according to an exemplary embodiment;
FIG. 4 is a flowchart of the central processing unit if the system power supply is turned on in the image processing apparatus in FIG. 1, according to an exemplary embodiment;
FIG. 5 is a flowchart of a control unit if the system power supply is turned off in the image processing apparatus in FIG. 1, according to an exemplary embodiment; and
FIG. 6 is a flowchart of the control unit in case of turning on the system power supply while the system power supply is turned off in the image processing apparatus in FIG. 1, according to an exemplary embodiment.

### DETAILED DESCRIPTION OF EXEMPLARY EMBODIMENTS

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different embodiments may be omitted for the convenience of clarity.

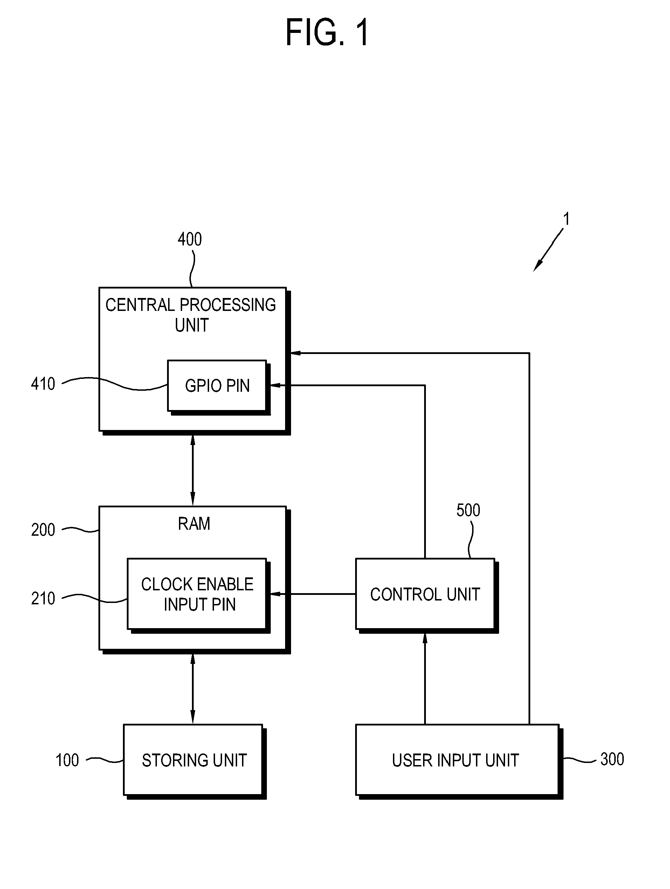

FIG. 1 is a block diagram of an image processing apparatus 1 according to an exemplary embodiment of the present invention. The image processing apparatus 1 according to the present exemplary embodiment may be implemented as various types, and for example, may be implemented as a television, a set top box, a media player replaying an optical storage medium such as a digital versatile disk (DVD) or a Blu-ray disk, a portable media player, etc.

As shown in FIG. 1, the image processing apparatus 1 according to the present exemplary embodiment performs system booting if a system power supply is turned on, and has various booting data referred to for the system booting. Here, the booting data includes various data which may be referred to in a booting, and is not limited to a specific type. The system power supply means power supply to the image processing apparatus 1 which may be implemented by turning on a system power supply unit such as a main power switch (not shown) included in the image processing apparatus 1.

For system booting, the image processing apparatus 1 includes a storing unit 100 in which the booting data is stored, a RAM 200 in which the booting data is loaded, and a central processing unit 400 loading the booting data in the RAM 200 and referring to the booting data to perform system booting. Here, the central processing unit 400 loads the booting data in the RAM 200 if system power supply is turned off, and refers to the booting data previously loaded in the RAM 200 to perform the system booting if the system power supply is turned on.

Also, the image processing apparatus 1 further includes a control unit 500 applying to the RAM 200 electric power capable of maintaining the booting data previously loaded in the RAM 200 to operate the RAM 200 in a low electric power mode. Also, the image processing apparatus 1 may include an electric power supplying unit (not shown) supplying and cutting off electric power supply to each element of the image processing apparatus 1 according to control of the control unit 500.

The image processing apparatus 1 may include various other elements as well as a display panel (not shown) displaying an image. Various known configurations may be employed thereto.

With the aforementioned configuration, the booting data can be maintained in the RAM 200 while the system power supply is turned off, and the booting data previously loaded in the RAM 200 can be referred to in system booting. Accordingly, time needed for loading the booting data in the RAM 200 from the storing unit 100 can be saved in the system booting.

Hereinafter, each element of the image processing apparatus 1 will be described.

T h e storing un i t 100 stores various type applications, libraries, data, etc. which the central processing unit 400 executes and refers to in addition to the booting data. The storing unit 100 may be implemented as a non-volatile memory, for example, a flash memory, a hard disk drive (HDD), a solid state drive (SSD), etc. maintaining previously stored data although electric power supply is cut off.

Among the data stored in the storing unit 100, data which is to be executed or referred to by the central processing unit 400 is loaded in the RAM 200. That is, for data stored in the storing unit 100 to be executed or referred to by the central processing unit 400, the corresponding data is initially loaded to the RAM 200.

Unlike the storing unit 100, the RAM 200 is a volatile memory not maintaining data previously loaded if electric power supply is cut off. Accordingly, in general, if the system power supply is turned off, electric power supply to the RAM 200 is cut off, and accordingly, the RAM 200 is initialized.

However, when certain data is loaded in the RAM 200, the RAM 200 is capable of maintaining the loaded certain data by being applied with electric power required to maintain the certain data. This operating state of the RAM 200 refers to a low electric power mode, more in detail, a self refresh mode.

When the RAM 200 operates in the self refresh mode, the RAM 200 internally reads data loaded in a cell of the RAM 200 and writes the data in the cell again regularly, thereby maintaining the data previously loaded. Here, since there is no input and output of data with respect to the outside, electric power needed in the self refresh mode is smaller than electric power needed in a normal mode. For example, if the RAM 200 requires a current of 180 mA in the normal mode, approximately 5 mA is required in the self refresh mode.

For the RAM 200 to enter the self refresh mode from the normal mode, a logic signal of "low" (a "low" signal) is applied to a clock enable input pin 210 of the RAM 200, and a command for entering the self refresh mode is received. The "low" signal and the command for entering the self refresh mode are output by the control unit 500.

A user input unit 300 outputs a command input by a user for controlling an operation of the image processing apparatus 1. According to an exemplary embodiment, an event of turning on or turning off of the system power supply is performed by generating a corresponding command through the user input unit 300 by a user. The user input unit 300 transmits this command to the central processing unit 400 and the control unit 500 to respectively perform a control operation depending on an event. The user input unit 300 may be implemented as a menu key (not shown) disposed at an outside of the image processing apparatus 1, a remote controller (not shown), etc.

The central processing unit 400 controls overall operations of the image processing apparatus 1 including processing of an input image. The central processing unit 400 may include a decoder, a scaler, an enhancer, etc. for processing the input image, and a main processor, a memory controller, etc. for controlling subordinate elements of the image processing apparatus 1. The central processing unit 400 may be implemented as a group including the aforementioned elements separately provided, or by an integrated chip.

Since various functions are integrated in the central processing unit 400, power consumption of the central processing unit 400 is high. Accordingly, when the system power supply is turned off, it is preferable but not necessary that electric power supply to the central processing unit 400 is cut off.

If an event of turning off the system power supply occurs, the central processing unit 400 loads booting data stored in the storing unit 100 to the RAM 200. If this process is completed, the control unit 500 cuts off the electric power supply to the central processing unit 400. Then, if the system power supply is turned on, electric power is also applied to the central processing unit 400, and accordingly, the central processing unit 400 performs system booting.

According to an exemplary embodiment, if the system power supply is turned on, the central processing unit 400 may perform two different booting processes based on a logic signal received from the control unit 500. Hereinafter, each booting process will be described.

The central processing unit 400 includes a general purpose input/output (GPIO) pin 410 for receiving a signal from an outside. As the system power supply is turned on, electric power is applied to the central processing unit 400, and the central processing unit 400 prepares system booting. Also, the control unit 500 outputs a logic signal of "low" (a "low" signal) or a logic signal of "high" (a "high" signal) to the GPIO pin 410 according to whether the RAM 200 maintains the low electric power mode or not while the system power supply is turned off.

I n th e present exemplary embodiment, i t is exemplarily described that the control unit 500 inputs a "high" signal if the RAM 200 maintains the low electric power mode, and the control unit 500 outputs a "low" signal if the RAM 200 does not maintain the low electric power mode. However, the present invention is not limited thereto. On the contrary, the control unit 500 may output the "low" signal if the RAM 200 maintains the low electric power mode, and may output the "high" signal if the RAM 200 does not maintain the low electric power mode.

When the central processing unit 400 prepares the system booting, if the "high" signal is applied to the GPIO pin 410, the central processing unit 400 determines that the RAM 200 maintains the low electric power mode while the system power supply is turned off. Since this means that the booting data is maintained in the RAM 200, the central processing unit 400 omits a process of loading the booting data from the storing unit 100 in the RAM 200, and refers to the booting data previously loaded in the RAM 200 to perform the system booting. This booting process refers to a warm booting.

On the contrary, if the "low" signal is input to the GPIO pin 410, the central processing unit 400 determines that the RAM 200 does not maintain the low electric power mode while the system power supply is turned off. Since this means that there is no booting data in the RAM 200, the central processing unit 400 loads the booting data from the storing unit 100 in the RAM 200, and then refers to the loaded booting data to perform the system booting. This booting process refers to a cold booting.

As described above, the central processing unit 400 may selectively perform the warm booting or the cold booting based on the logic signal input to the GPIO pin 410. Here, the terms "warm booting" and "cold booting" are employed only for convenience of description, and do not limit the present invention thereto.

The central processing unit 400 examines an error of the booting data previously loaded in the RAM 200 before performing the warm booting. In the examination result, if there is no error, the central processing unit 400 performs the warm booting. On the contrary, if an error is examined, since the warm booting is incapable of being normally performed, the central processing unit 400 performs the cold booting.

If an event of turning off a system power supply occurs, the control unit 500 determines whether the booting data is loaded in the RAM 200 by the central processing unit 400 or not. If the booting data is loaded in the RAM 200, the control unit 500 inputs a low signal to the clock enable input pin 210 of the RAM 200, and transmits a low electric power mode entering command to the RAM 200. Accordingly, the RAM 200 enters the low electric power mode.

While the system power supply is turned off, the control unit 500 monitors whether the RAM 200 maintains the low electric power mode. If an accident such as an electric power plug of the image processing unit 1 being pulled off occurs so that the RAM 200 fails to maintain the low electric power mode, the control unit 500 stores this environment change. For this, the control unit 500 may include a separate electrically erasable programmable read only memory (EEPROM).

If the system power supply is turned on, the control unit 500 applies a logic signal to the GPIO pin 410 of the central processing unit 400 based on the monitoring result. For example, if the RAM 200 maintains the low electric power mode while the system power supply is turned off, the control unit 500 may apply the "high" signal, and otherwise, may apply the "low" signal. Accordingly, the central processing unit 400 selects the warm booting or the cold booting to perform the system booting.

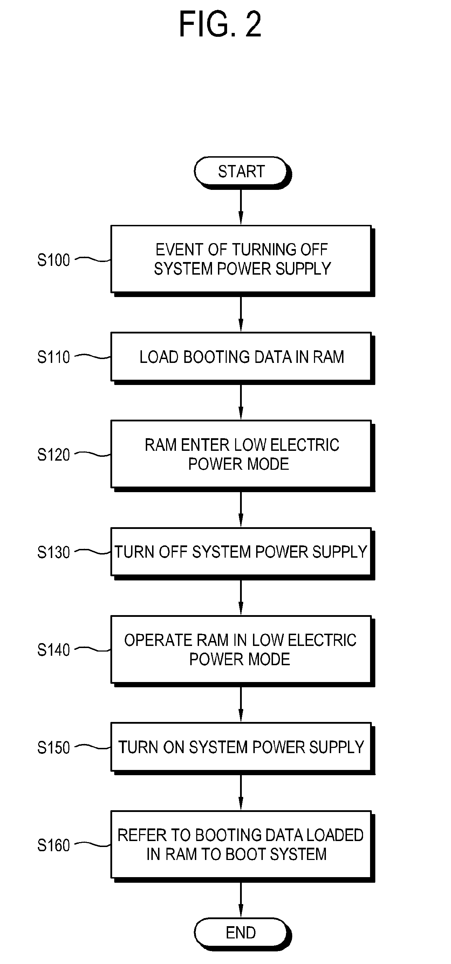

With this configuration, hereinafter, a control method of the image processing apparatus 1 according to the present exemplary embodiment will be described by referring to FIG. 2.

FIG. 2 is a flowchart schematically illustrating a control method of the image processing apparatus 1 according to an exemplary embodiment.

As shown in FIG. 2, at first, an event of turning off the system power supply occurs (S100). Accordingly, the central processing unit 400 loads the booting data in the RAM 200 (S110), and the control unit 500 makes the RAM 200 enter the low electric power mode (5120). If this process is completed, the system power supply is turned off (S130).

While the system power supply is turned off, the RAM 200 operates in the low electric power mode to maintain the loaded booting data (5140).

If the system power supply is turned on (S150), the central processing unit 400 refers to the booting data loaded in the RAM 200 to perform system booting (S160). Accordingly, time needed for loading the booting data in the RAM 200 from the storing unit 100 in system booting can be saved, thereby reducing a system booting time.

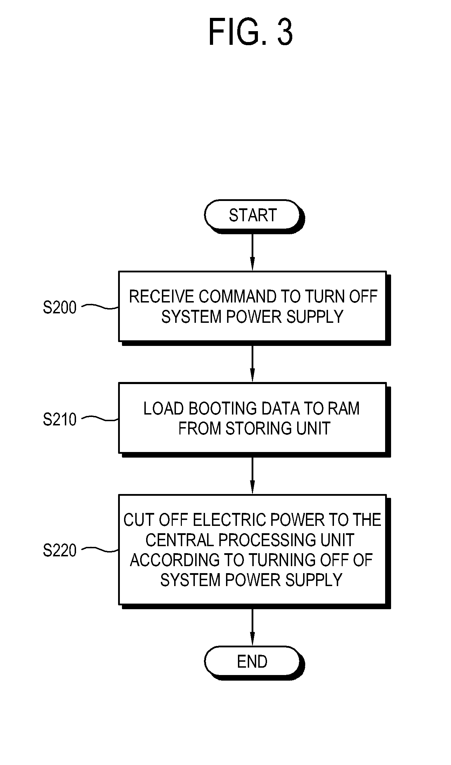

Hereinafter, the control process in FIG. 2 will be described more in detail by each process by referring to FIGS. 3 to 6.

At first, a control method of the central processing unit 400 in case of turning off the system power supply will be described. FIG. 3 is a flowchart illustrating this process according to an exemplary embodiment.

As shown in FIG. 3, in an initial state that the system power supply is turned on, the central processing unit 400 receives a command to turn off the system power supply as an event of turning off the system power supply (5200).

A method of transmitting the command to the central processing unit 400 is not limited. For example, a user may perform an input for turning off the system power supply through the user input unit 300, and the user input unit 300 may generate a command corresponding thereto, and may transmit the command to the central processing unit 400.

The central processing unit 400 loads the booting data stored in the storing unit 100 in the RAM 200 from the storing unit 100 (S210).

If the loading of the booting data in the RAM 200 is performed, the system power supply is turned off, and accordingly, the electric power to the central processing unit 400 is cut off (S220). Turning off the system power supply and cutting off the electric power supply to the central processing unit 400 may be performed by the control unit 500, or the central processing unit 400 may transmit a control signal to an electric power supplying unit (not shown) supplying system power to the image processing apparatus 1 to perform turning off the system power supply and cutting off the electric power supply to the central processing unit 400.

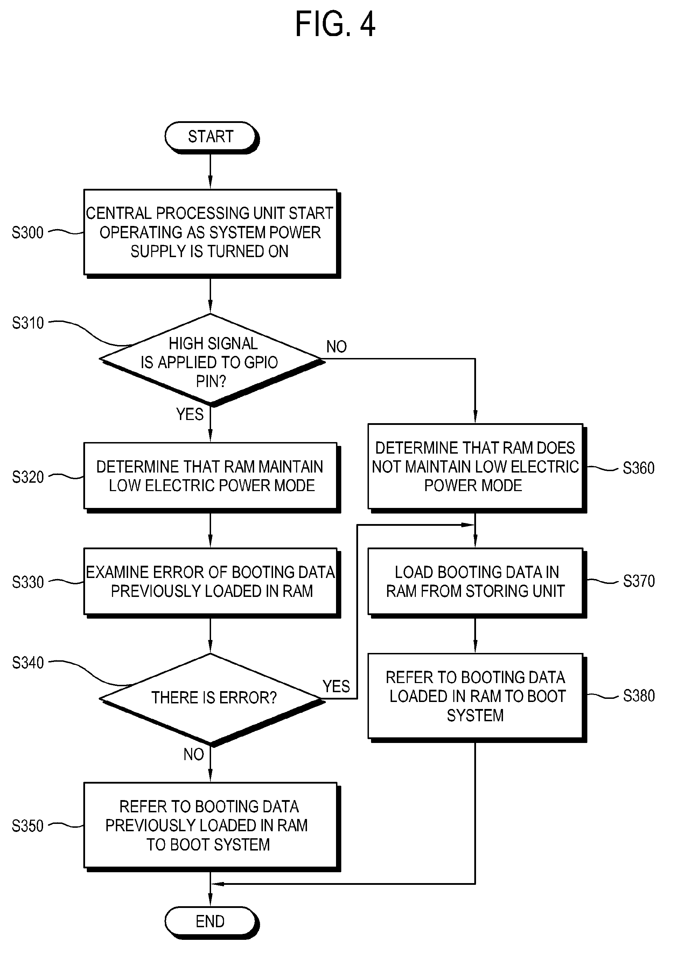

Then, a control process of the central processing unit 400 for performing system booting when the system power supply of the image processing apparatus 1 is turned on will be described. FIG. 4 is a flowchart illustrating this process according to an exemplary embodiment.

As shown in FIG. 4, if the system power supply is turned on, the central processing unit 40 0 starts operating (S300).

Before performing the system booting, the central processing unit 400 determines whether a signal is applied to the GPIO pin 410, and whether the applied signal is a "high" signal (S310).

If the "high" signal is applied to the GPIO pin 410, the central processing unit 400 determines that the RAM 200 maintains the low electric power mode while the system power supply is turned off (S320). Depending on the determination, the central processing unit 400 performs the following warm booting process (S330, S340 and S350).

The central processing unit 400 examines an error of the booting data previously loaded in the RAM 200 (5330). The central processing unit 400 determines whether there is an error in the booting data (5340), and boots the system by referring to the booting data previously loaded in the RAM 200 if there is no error (S350).

On the contrary, if it is determined that there is an error, the central processing unit 400 performs the cold booting process (S370 and 380). Subordinate processes of the cold booting process (S370 and 380) will be described later.

In operation S310 of determining whether the "high" signal is input to the GPIO pin 410 or not, if a "low" signal is input, the central processing unit 400 determines that the RAM 200 does not maintain the low electric power mode (S360). Accordingly, the central process unit 400 performs the following cold booting process (S370 and S380).

The central processing unit 400 loads the booting data stored in the storing unit 100 in the RAM 200 from the storing unit 100 (S370). Then, the central processing unit 400 performs the system booting by referring to the booting data loaded in the RAM 200 (5380).

In this manner, the central processing unit 400 may reduce the system booting time by the warm booting process, and may perform the cold booting process if it is difficult to perform the warm booting.

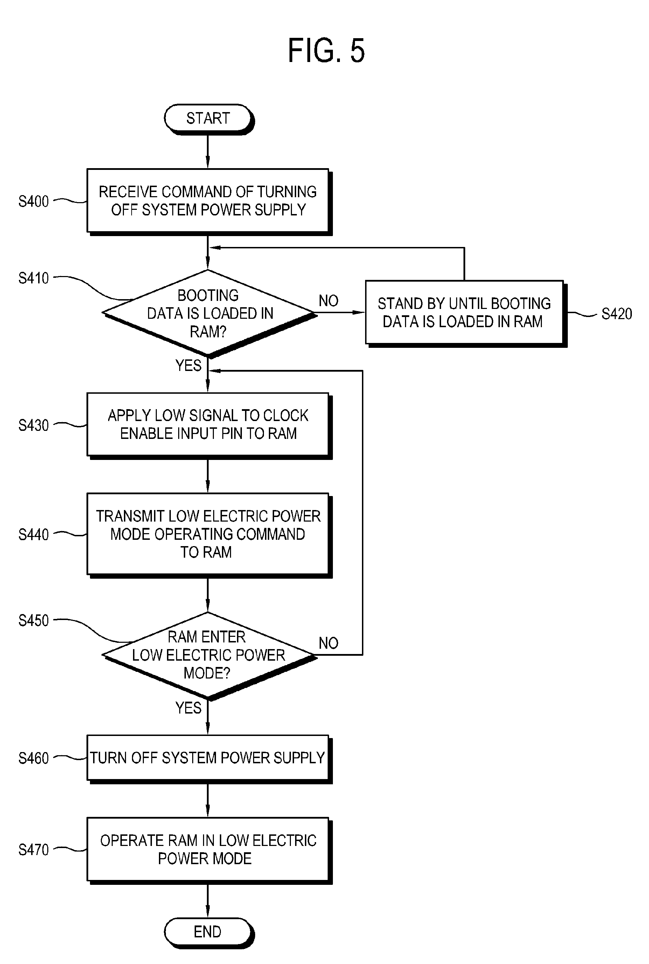

Then, a control method of the control unit 500 in case of turning off the system power supply will be described. FIG. 5 is a flowchart illustrating this process according to an exemplary embodiment.

As shown in FIG. 5, in an initial state that the system power supply is turned on, the control unit 500 receives a command of turning off the system power supply (S400).

The control unit 500 determines whether the booting data is loaded in the RAM 200 by the central processing unit 400 (5410). If the booting data is not loaded in the RAM 200, the control unit 500 is on a standby state until loading the booting data is completed (5420).

If it is determined that the booting data is loaded in the RAM 200, the control unit 500 applies a "low" signal to the clock enable input pin 210 of the RAM 200 (S430) Then, the control unit 500 transmits a command for operating in the low electric power mode, for example, the self refresh mode, to the RAM 20 0 (S440). Accordingly, the RAM 200 enters the low electric power mode.

The control unit 500 determines whether the RAM 200 enters the low electric power mode or not (S450), and turns of f the system power supply (S460) if it is determined that the RAM has entered the low electric power mode (S460). Although the system power supply is turned off, and electric power supply to the central processing unit 400 is cut off, the storing unit 100 and the RAM 200 operate in th e low electric power mode (S470). Accordingly, the booting data loaded in the RAM 200 can be maintained.

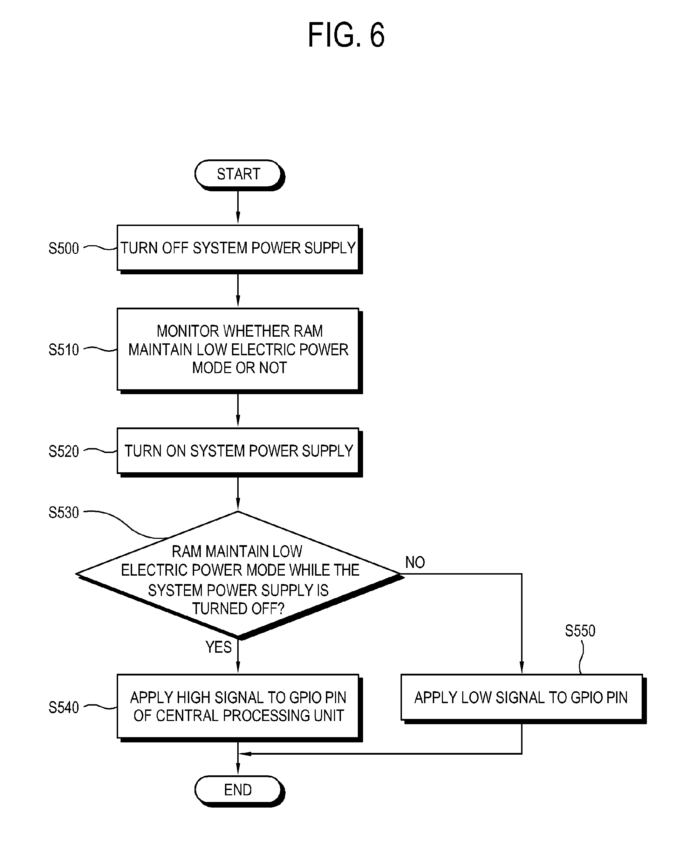

Then, a control method of the control unit 500 in case of turning on the system power supply while the system power supply is turned off will be described. FIG. 6 is a flowchart illustrating this process according to an exemplary embodiment.

As shown in FIG. 6, the system power supply is turned off (S500), and the RAM 200 operates in the low electric power mode. The control unit 500 monitors whether the RAM 200 maintains the low electric power mode or not while the system power supply is turned off (S510).

If the system power supply is turned on (S520), the control unit 500 determines the monitoring result whether the RAM 200 maintains the low electric power mode while the system power supply is turned off (S530).

If the RAM 200 maintains the low electric power mode, the control unit 500 applies the "high" signal to the GPIO pin 410 of the central processing unit 400 (S540). On the contrary, if the RAM 200 does not maintain the low electric power mode, the control unit 500 applies the low signal to the GPIO pin 410.

Accordingly, the central processing unit 400 selects the warm booting or cold booting processes to perform the system booting.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including an y accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in th i s specification (including any accompanying claims, abstract and drawings), or to any novel one, or any novel combination, of the steps of any method or process so disclosed.

## Claims

1. An image processing apparatus comprising:
a storing unit in which booting data used for system booting of the apparatus is stored;
a random access memory (RAM) in which the booting data is loaded from the storing unit;
a central processing unit which loads the booting data in the RAM from the storing unit if system power supply to the apparatus is turned off, and refers to the booting data loaded in the RAM to perform the system booting if the system power supply is turned on; and
a control unit which cuts off power supply to the central processing unit, and controls the RAM to operate in a low power mode in which power is supplied to the RAM to maintain the booting data loaded in the RAM while the system power supply is turned off.

2. The image processing apparatus according to claim 1, wherein the control unit monitors whether the RAM maintains the low power mode while the system power supply is turned off, and outputs a selective logic signal corresponding to a monitoring result to th e central processing unit if the system power supply is turned on.

3. The image processing apparatus according to claim 2, wherein the central processing unit determines whether the RAM maintains the low power mode while the system power supply is turned off based on the logic signal output from the control unit, and performs the system booting based on a determination result.

4. The image processing apparatus according to claim 3, wherein the central processing unit refers to the booting data previously loaded in the RAM without loading the booting data in the RAM from the storing unit if it is determined that the RAM maintains the low power mode, and loads the booting data from the storing unit to the RAM if it is determined that the RAM does not maintain the low power mode.

5. The image processing apparatus according to claim 4, wherein the central processing unit examines an error of the booting data loaded to the RAM if it is determined that the RAM maintains the low power mode, and refers to the booting data previously loaded in the RAM without loading the booting data to the RAM from the storing unit, and
wherein the central processing unit loads the booting data from the storing unit in the RAM if it is determined that there is an error in the booting data previously loaded in the RAM.

6. The image processing apparatus according to any preceding claim, wherein the control unit transmits to the RAM a command ordering the RAM to enter the low power mode if determining that the booting data is loaded in the RAM after the system power supply is turned off.

7. The image processing apparatus according to any preceding claim, wherein the storing unit comprises a non-volatile memory that maintains data previously stored when power to the storing unit is cut off.

8. A method of controlling an image processing apparatus comprising a storing unit which stores booting data used for system booting of the apparatus, a random access memory (RAM) in which the booting data is loaded, and a central processing unit which refers to the booting data to perform the system booting, the method comprising:
loading the booting data in the RAM if system power supply to the apparatus is turned off, and cutting off power to the central processing unit and operating the RAM in a low power mode in which power is applied to the RAM to maintain the booting data loaded in the RAM while the system power supply is turned off; and
controlling the central processing unit to refer to the booting data loaded in the RAM to perform the system booting if the system power supply to the apparatus is turned on.

9. The control method of the image processing apparatus according to claim 8, wherein the operating the RAM in the low power mode comprises monitoring whether the RAM maintains the low power mode or not while the system power supply is turned off, and
wherein the controlling the central processing unit to refer to the booting data loaded in the RAM to perform the system booting comprises inputting a selective logic signal corresponding to a monitoring result to the central processing unit.

10. The control method of the image processing apparatus according to claim 9, wherein the controlling the central processing unit to refer to the booting data loaded in the RAM to perform the system booting further comprises controlling the central processing unit to selectively perform the system booting based on the logic signal input to the central processing unit.

11. The control method of the image processing apparatus according to claim 10, wherein the controlling the central processing unit to selectively perform the system booting comprises:
referring to the booting data previously loaded in the RAM without loading the booting data from the storing unit to the RAM if a logic signal indicating that the RAM maintains the low power mode is received, and
loading the booting data from the storing unit to the RAM if a logic signal indicating that the RAM does not maintain the low power mode is received.

12. The control method of the image processing apparatus according to claim 11, wherein the referring to the booting data previously loaded to the RAM comprises:
examining an error of the booting data previously loaded to the RAM if the logic signal indicating that the RAM maintains the low power mode is received, and
loading the booting data from the storing unit to the RAM if it is determined that there is an error in the booting data previously loaded in the RAM.
